# EUROPÄISCHE PATENTSCHRIFT

(11) **EP 1 431 113 B1**
(45) Veröffentlichungstag und Bekanntmachung des Hinweises auf die Patenterteilung: **28.03.2007**
(21) Anmeldenummer: 03028104.2
(22) Anmeldetag: 05.12.2003
(51) Int. Cl.: B60N 3/04

(54) **Formteil zur Halterung und Versteifung eines laschenförmigen Ausschnittteils in einem flächigen Gut**
Profiled part to hold and stiffen an overlapping section in a flat item
Pièce profilée de fixation et renforcement d'une portion à recouvrement dans un produit plat

(30) Priorität: 18.12.2002 DE 10259313
(43) Veröffentlichungstag der Anmeldung: 23.06.2004
(73) Patentinhaber: Stankiewicz GmbH, 29352 Adelheidsdorf (DE)
(72) Erfinder: Striefler, Armin, 29221 Celle (DE)
(74) Vertreter: Melzer, Wolfgang

(56) Entgegenhaltungen:
- AT-B- 374 748
- US-A- 4 898 417
- US-A- 5 636 408

## Beschreibung

Die Erfindung betrifft ein Formteil zur Halterung und Versteifung eines laschenförmigen Ausschnittteils in einem flächigen Gut, wobei der laschenförmige Ausschnittteil mittels des Formteils aus der Fläche des Guts herausklappbar und in diese zurückklappbar ist. Das Formteil weist ein Flachteil zur Abdeckung zumindest des Schnittverlaufs und zweckmäßig einer Klapplinie zwischen den freien Enden des Schnittverlaufs und mindestens einen am Ende Vorsprünge in einer Ebene parallel zur Ebene des Flachteils aufweisenden vom Flachteil senkrecht vorspringenden Stegteil auf. Der Abstand zwischen dem Flachteil und den Vorsprüngen entspricht im wesentlichen der Dicke des Gutes an dieser Stelle, zur Aufnahme eines freigeschnitten Abschnittes des Ausschnittteils.

Flächige Gute, die so biegesteif, aber auch so biegsam sind, dass die gefaltet werden können, werden in vielen Bereichen des täglichen Lebens verwendet. Ein typischer Anwendungsfall solchen Gutes ist ein Teppich, der in einem Gehäuse, wie beispielsweise einer Kraftfahrzeugkarosserie ausgelegt wird. Dieser Teppich kann an seiner dem Fahrzeug zugewandten, also der Sichtseite abgewandten Seite, Beschichtungen aus schalldämmenden und schalldämpfenden Materialien tragen. Bei der Auslegung dieses Gutes können Kennzeichnungen verdeckt werden, die jedoch zumindest gelegentlich zugänglich bleiben müssen, beispielsweise weil eine entsprechende gesetzliche Vorgabe vorliegt. Beispielsweise kann bei dem erwähnten Ausführungsbeispiel von dem Teppich die Fahrgestellnummer abgedeckt sein, die jedoch zugänglich bleiben muss.

Zu diesem Zweck wird üblicherweise ein laschenförmiger Ausschnittteil in dem flächigen Gut dadurch erreicht, dass längs eines die Kennzeichnung umschreibenden Rechteckes drei dessen Seiten geschnitten werden derart, dass der Ausschnittteil um die vierte Linie klappbar ist. Die Schnittlinie ist allerdings schmutzanfällig und stellt eine Unfallgefahr dar. Insbesondere steht ein Teil des Ausschnittteils dann aus der Fläche des Gutes vor, wenn der Klappvorgang wenige Male durchgeführt worden ist. Insbesondere zur Vermeidung dieser Unfallgefahr, aber auch um den leichten Zugang zu ermöglichen, ist vorgeschlagen worden, ein Formteil der eingangs definierten Art vorzusehen, insbesondere ein Kunststoff-Spritzguss-Formteil. Ein handelsübliches Formteil dieser Art weist im Bereich der Klapplinie ebenfalls vorspringende Stegteile mit entsprechenden Vorsprüngen auf, die durch in gesonderter Weise vorzusehende kurze Schnitte längs der Klapplinie hindurchzuführen sind, wobei dann der laschenförmige Ausschnittteil hinter die anderen vorspringenden Stegteile einzubringen ist. Dies muss von Hand erfolgen und erfordert Sorgfalt. Die herkömmliche Vorgehensweise ist somit äußerst umständlich und daher kostspielig.

Ausgehend hiervon ist es Aufgabe der Erfindung, ein Formteil der beschriebenen Art dahingehend weiterzubilden, dass dessen Montage am laschenförmigen Ausschnittteil wesentlich vereinfacht ist.

Die Aufgabe wird erfindungsgemäß durch ein Bügelelement gelöst, das an seinen Enden mit dem Flachteil über Verbindungsstege verbunden ist, wobei die Verbindungsstege so bemessen und angeordnet sind, dass sie im Bereich der freien Enden des Schnittverlaufes den Schnitt durchsetzen und dort das Gut durchgreifen können, wobei der Abstand zwischen Flachteil und Bügelelement im wesentlichen der Dicke des Gutes an diesen Stellen sowie im wesentlichen auch der Dicke des Gutes im Verlauf der Klapplinie entspricht.

Die Erfindung wird durch die Merkmale der abhängigen Ansprüche weitergebildet.

Wesentlich wird somit mittels des Bügelelementes ein Schlitz zwischen Flachteil und Bügelelement definiert, durch den in einfacher Weise der laschenförmige Ausschnittteil fädelbar ist. Die Erfindung macht sich dabei die Tatsache zunutze, dass zum einen der Aufklappvorgang relativ selten notwendig ist und zum anderen aufgrund der Abmessung und aufgrund der Materialgegebenheiten ein Herabgleiten des Formteiles von dem laschenförmigen Ausschnittteil selbst im aufgeklappten Zustand kaum möglich ist.

Die Erfindung wird anhand der in der Zeichnung dargestellten Ausführungsbeispiele näher erläutert.
Fig. 1 zeigt perspektivisch und in einer Ansicht von unten ein typisches und bevorzugtes Ausführungsbeispiel eines Formteils gemäß der Erfindung,
Fig. 2 bis Fig. 4 zeigen andere Ausführungsformen eines Formteils gemäß der Erfindung,
Fig. 5 schematisch die Zuordnung zwischen Ausschnittteil und Formteil bei dem Ausführungsbeispiel gemäß Fig. 1 gemäß der Schnittlinie V-V mit Zuordnung zu einem abgedeckten Teil.

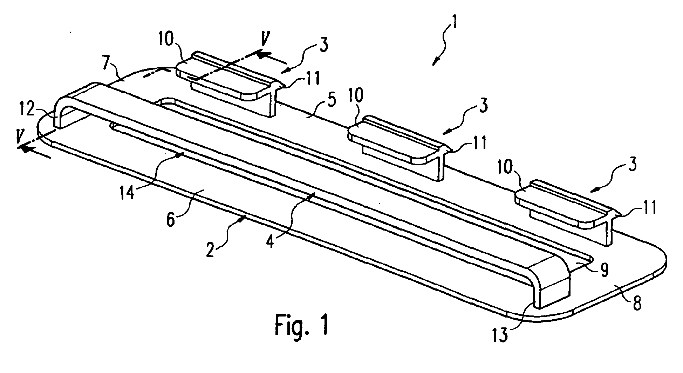

Fig. 1 zeigt perspektivisch ein Formteil 1 gemäß der Erfindung, und zwar in Ansicht von der Unterseite her. Das Formteil 1 besteht im wesentlichen aus einem Flachteil 2, aus mindestens einem, hier drei Stegteilen 3 und schließlich einem Bügelelement 4. Bei dem dargestellten Ausführungsbeispiel ist das Flachteil 2 als flächiges Rahmenteil mit rechteckförmigem Verlauf ausgebildet mit zwei langen Abschnitten 5 und 6 und zwei kurzen Abschnitten 7 und 8. Diese Abschnitte 5 bis 8 umschreiben somit eine rechteckförmige Öffnung 9.

Das Flachteil 2 kann bei Bedarf auch vollflächig ausgebildet sein, also einen Ausschnittteil eines flächigen Gutes vollständig abdecken. Dies kann bei besonders beanspruchten Bereichen des flächigen Gutes vorteilhaft sein, oder auch zu besonderen dekorativen Zwecken herangezogen werden. Im folgenden wird aber ein Rahmenteil als typisches Ausführungsbeispiel des Flachteils 2 erläutert bzw. verwendet.

Von dem einen langen Abschnitt 5 des rahmenförmigen Flachteils 2 ragen beim Ausführungsbeispiel drei Stegteile 3 senkrecht weg, wobei mit Abstand von der Ebene des Flachteils 2 von jedem Stegteil 3 zwei Vorsprünge in eine Ebene parallel zur Ebene des Flachteils 2 wegragen, nämlich zum einen Vorsprünge 10, die zum anderen langen Abschnitt 6 des Flachteils 2 hinweisen, sowie weitere Vorsprünge, die in der anderen Richtung wegweisen. Der Abstand zwischen den beiden zueinander weisenden Flächen der Vorsprünge 10 und 11 einerseits und dem Flachteils 2 andererseits entspricht dabei im wesentlichen der Dicke des aufzunehmenden Gutes an dieser Stelle.

Das Bügelelement 4 ist mit dem anderen langen Abschnitt 6 des Rahmenteiles 2 über Verbindungsstege 12 und 13 fest verbunden, derart, dass zwischen diesem langem Abschnitt 6 des Flachteils 2, dem Bügelelement 4 und den beiden Verbindungsstegen 12 und 13 ein Schlitz 14 definiert ist. Der Abstand zwischen dem Bügelelement 4 einerseits und diesem langen Abschnitt 6 des Flachteils 2 andererseits entspricht wiederum der Dicke des Gutes an dieser Stelle bzw. dem Verlauf der Dicke des Gutes zwischen den Verbindungsstegen 12 und 13, wenn das Gut aufgenommen ist, was weiter unten noch näher erläutert wird.

Zur einfacheren Darstellung ist beim Ausführungsbeispiel davon ausgegangen, dass im hier interessierenden Bereich das Gut stets gleiche Dicke besitzt. Dies ist jedoch keinesfalls zwingend. Ebenso ist es keinesfalls zwingend, dass ein laschenförmiger Ausschnittteil eines flächigen Gutes wie hier vorausgesetzt, rechteckförmige Gestalt besitzt. Vielmehr ist jede theoretische Form denkbar, vorausgesetzt, dass zumindest ein Abschnitt gradlinig verläuft, der einer Klapplinie entspricht, um die der laschenförmige Ausschnittteil geklappt werden kann.

Dabei ist die Anordnung der Verbindungsstege 12 und 13 am Flachteil 2 derart, dass sie bei montiertem Zustand den freien Enden des Schnittverlaufes zugeordnet sind, zwischen denen die Klapplinie definiert ist, während die der Klapplinie abgewandten Abschnitte des laschenförmigen Ausschnittteils zwischen dem Rahmenteil 2 und den entsprechenden Vorsprüngen 10 der Stegteile 3 eingreifen, wobei bei eingeklapptem Zustand die anderen Vorsprünge 11 der Stegteile 3 den den laschenförmigen Ausschnittteil umgebenden Bereich des flächigen Gutes ebenfalls noppenartig einrastend untergreifen und so eine Schnappverbindung erreichen.

Abhängig von der Form und dem Verlauf der Abschnitte des Flachteiles 2 können auch mehr oder weniger als drei Stegteile 3 vorgesehen sein, diese können auch in anderen Abschnitten des Flachteiles 2 vorgesehen sein.

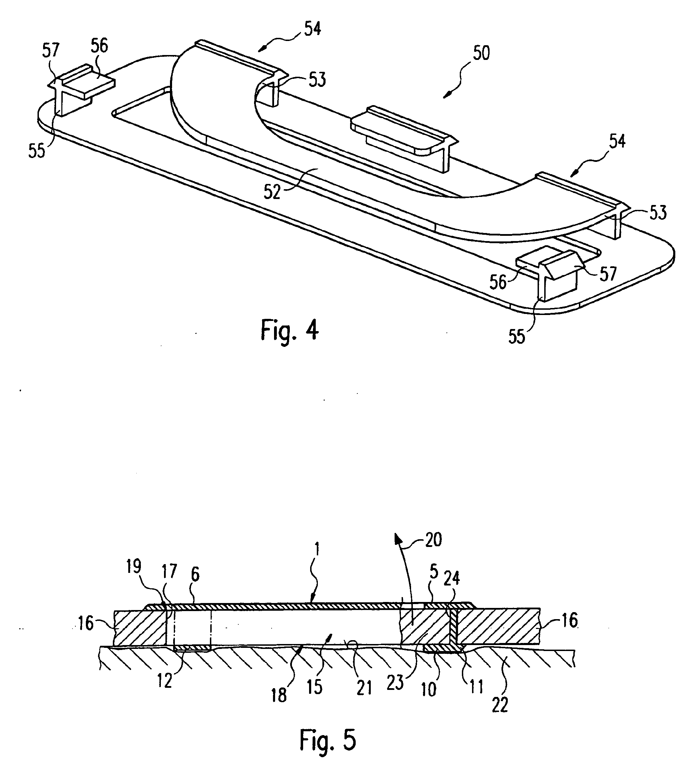

Fig. 5 zeigt im Schnitt den über einen laschenförmigen Ausschnittteil 15 eines flächigen Gutes 16 aufgebrachten Zustand. Fig. 5 zeigt auch ein freies Ende 17 des Schnittverlaufes 18 und zeigt auch die Klapplinie 19, um die gemäß einen Pfeil 20 der laschenförmige Ausschnittteil 15 aus der Ebene des flächigen Gutes 16 herausgeklappt werden kann, um einen Bereich 21 des Untergrundes 22, beispielsweise eine Kraftfahrzeugkarosserie, zugänglich zu machen. In diesem Bereich 21 kann beispielsweise die Fahrgestellnummer des Kraftfahrzeuges angebracht sein.

Aus Fig. 1 und Fig. 5 ergibt sich auch die Montage des Formteiles 1 an dem laschenförmigen Ausschnittteil 15. Es genügt, wenn dieses laschenförmige Ausschnittteil 15 etwa gemäß dem Pfeil 20 aus der Ebene des flächigen Gutes 16 herausgeklappt ist, wobei dann das Formteil 1 über den Schlitz 14 aufgefädelt oder aufgeschoben wird, bis die den freien Enden 17 bzw. der Klapplinie 19 abgewandten Bereiche 23 zur Anlage gegen die Bereiche 24 der Stegteile 3 zwischen den erstgenannten Vorsprüngen 10 und dem erstgenannten langem Abschnitt 5 des Rahmenteils 2 eingreifen. Wenn bei der Ausbildung des Schnittes zur Erreichung des Schnittverlaufes 18 kein Material entfernt wird, genügen die vorgesehenen Abmessungen bereits, um das Formteil 1 im wesentlichen in seiner Lage zu fixieren, da eine gewisse Materialverformung bei dem flächigen Gut 16 bzw. dessen laschenförmigen Ausschnittteils 15 erfolgt. Durch Wahl geeigneter Materialien oder Oberflächenstrukturen kann ferner erreicht werden, dass geringes Gleitvermögen vorliegt, also gute Haftung, so dass selbst bei ausgeklapptem Zustand ein Abziehen des Formteils 1 von dem laschenförmigen Ausschnittteil 15 nur mit Kraftaufwand möglich ist.

Die Breite der Abschnitte 5 bis 8 wird sich in der Praxis nach dem Material des flächigen Gutes und dessen Empfindlichkeit richten. Wie erwähnt kann das Flachteil auch vollständig sein. Die Farbe des Materials des Formteils 1 wird sich üblicherweise nach der Farbe des flächigen Gutes 16 richten, kann jedoch auch bei Bedarf eine kontrastierende oder Signalfarbe sein.

Vorzugsweise handelt es sich um ein durch Spritzgießen hergestelltes Kunststoff-Formteil 1. Besonders geeignet ist Polypropylen (PP) oder Acrylbutadienstyrol (ABS)

Weiterbildungen und andere Ausführungsformen von Formteilen gemäß der vorliegenden Erfindung werden anhand der Zeichnungen 2 bis 4 näher erläutert. Dabei werden lediglich diejenigen Teile näher erläutert, die eine Weiterbildung bzw. Änderung gegenüber der Ausführungsform gemäß Fig. 1 darstellen.

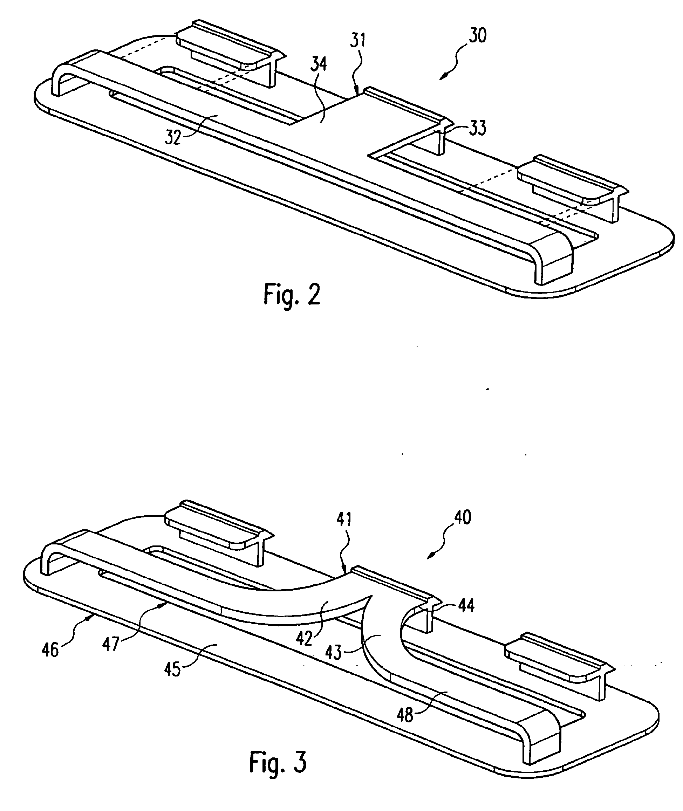

Fig. 2 zeigt ein Formteil 30, bei dem bei einem Stegteil 31 der zum Bügelelement 32 weisende Vorsprung 33 verlängert und über ein Verbindungsteil 34 mit dem Bügelelement 32 fest verbunden ist. Durch Strichlinien ist angedeutet, dass auch die anderen Stegteile in entsprechender Weise verbunden sein können.

Hierdurch wird verhindert, dass durch einen ungewollten Druck gegen den laschenförmigen Ausschnittteil, beispielsweise in einem möglicherweise darunter befindlichen Hohlraum im Untergrund dieser laschenförmige Ausschnittteil aus der Verrastung an dem Stegteil 31 herausgedrückt werden könnte.

Fig. 3 zeigt eine Weiterbildung der Ausführungsform gemäß Fig. 2. Bei diesem Formteil 40 ist das Bügelelement 48 durch zwei Zweige 42 und 43 definiert, deren freie Enden mit dem Vorsprung 44 des Stegteils 41 verbunden sind. Neben dem erwähnten Vorteil der Ausführungsform gemäß Fig. 2 kann darüber hinaus auch der Einfädelvorgang des laschenförmigen Ausschnittteiles 15 in den zwischen den Zweigen 42, 43 des Bügelelements 48 und dem gegenüberliegenden langen Abschnitt 45 des Flachteils 46 definierten Schlitz 47 vereinfacht werden.

Fig. 4 zeigt eine Ausführungsform eines Formteils 50, bei dem das Bügelelement 52 von den entsprechenden Vorsprüngen 53 zweier Stegteile 54 ausgeht, und sich in einer gedachten Linie zwischen zwei Stegteilen 55 erstreckt, die den Verbindungsstegen der anderen Ausführungsform entsprechen, wobei diese beiden randseitigen Stegteile 55 Vorsprünge 56 und 57 aufweisen können, jedoch nicht müssen. Hier ist entscheidend, dass die Stege 55 nahe den freien Ende des Schnittverlaufes den Schnitt zwischen laschenförmigem Ausschnittteil und flächigem Gut durchgreifen und so eine Führung bewirken. Der laschenförmige Ausschnittteil kann bei diesem Ausführungsbeispiel klammerartig eingeklemmt sein, wobei der Einfädelvorgang erleichtert ist, insbesondere wenn eine Einlaufschräge (nicht dargestellt) vorgesehen ist.

Selbstverständlich sind Kombinationen der verschiedenen Ausführungsformen möglich, wobei die letztendlich gewählte Form des Formteiles im wesentlichen von der Größe des laschenförmigen Ausschnittteiles einerseits und dessen Dicke und dessen Material andererseits und schließlich dessen Platzierung abhängt, also ob es eher versteckt angeordnet sein wird oder leicht und auch zufällig erreichbar.

Zusammenfassend ist also wesentlich, dass der laschenförmige Ausschnittteil wie bisher durch lediglich einen Schnitt zwischen denjenigen freien Enden des Schnittverlaufes definiert werden muss, zwischen denen eine Klapplinie definiert ist, und dass das Formteil in einfacher Weise darüber geschoben werden kann, ohne dass hohe Fingerfertigkeit erforderlich ist, so dass das Einfädeln weitestgehend automatisiert werden kann. Darüber hinaus ist ein sicherer Sitz des Formteils am laschenförmigen Ausschnittteil erreicht und ist das notwendige Klappen sichergestellt.

Darüber hinaus zeichnet sich das erfindungsgemäße Formteil auch dadurch aus, dass es nachrüstbar ist.

## Patentansprüche

1. Formteil zur Halterung und Versteifung eines laschenförmigen Ausschnittteiles (15) in einem flächigen Gut (16), wobei der laschenförmige Ausschnittteil (15) mittels des Formteiles (1; 30; 40; 50) aus der Fläche des Guts (16) herausklappbar und in diese zurückklappbar ist,
mit einem Flachteil (2; 46) zur Abdeckung zumindest des Schnittverlaufes (18) und gegebenenfalls einer Klapplinie (19) zwischen den freien Enden (17) des Schnittverlaufes (18), und
mit mindestens einem am Ende Vorsprünge (10, 11; 33; 44; 53) in einer zur Ebene des Flachteils (2; 46) parallelen Ebene aufweisenden vom Flachteil (2; 46) senkrecht vorspringenden Stegteil (3; 31; 41; 54), wobei der Abstand zwischen dem Flachteil (2; 46) und den Vorsprüngen (10; 11; 33; 44; 53) im wesentlichen der Dicke des Gutes (16) an diesen Stellen entspricht zur Aufnahme eines freigeschnittenen Abschnittes des laschenförmigen Ausschnittteils (15),
**gekennzeichnet durch**
ein Bügelelement (4; 32; 48; 52), das an seinen Enden mit dem Flachteil (2; 46) über Verbindungsstege (12, 13) verbunden ist, wobei die Verbindungsstege (12, 13) so bemessen und angeordnet sind, dass sie im Bereich der freien Enden (17) des Schnittverlaufes (18) den Schnitt durchsetzen und dort das Gut (16) durchgreifen können, wobei der Abstand zwischen Flachteil (2; 46) und Bügelelement (4; 32; 48; 52) im wesentlichen der Dicke des Gutes (16) an diesen Stellen sowie im wesentlichen auch der Dicke des Gutes (16) im Verlauf der Klapplinie (19) entspricht..

2. Formteil nach Anspruch 1, **dadurch gekennzeichnet, dass** ein zur Aufnahme eines freigeschnittenen Abschnittes des laschenförmigen Ausschnittteils (15) vorgesehener Vorsprung (33) mindestens eines Stegteils (31) mit dem Bügelelement (32) über ein Verbindungsteil (34) verbunden ist, wobei der Abstand zwischen dem Verbindungsteil (34) und der durch das Flachteil (2) definierten Fläche im wesentlichen der Dicke des Gutes (16) an dieser Stelle im Bereich des Verlaufes des Verbindungsteils (34) entspricht.

3. Formteil nach Anspruch 1 oder 2, **dadurch gekennzeichnet, dass** bei nichtdurchgehendem Verlauf des Bügelelementes (48) dessen freie Enden über entsprechende Verbindungsteile mit einem entsprechendem Vorsprung (44) eines Stegteiles (41) verbunden sind.

4. Formteil nach Anspruch 3, **dadurch gekennzeichnet, dass** die freien Enden über entsprechende Verbindungsteile mit nur einem entsprechenden Vorsprung (44) verbunden sind.

5. Formteil nach einem der Ansprüche 1 bis 4, **dadurch gekennzeichnet, dass** das Flachteil (2; 46) im wesentlichen in Aufsicht rechteckförmig verläuft und das Bügelelement (4) im wesentlichen parallel zu einer der Seiten des Rechtecks verläuft.

6. Formteil nach einem der Ansprüche 1 bis 5, **dadurch gekennzeichnet, dass** das Flachteil (2) als Rahmenteil mit mindestens einer Öffnung (9) in ihrem Flächenverlauf ausgebildet ist.

7. Formteil nach einem der Ansprüche 1 bis 6, **gekennzeichnet durch** ein Spritzgussteil aus Kunststoff.

8. Formteil nach einem der Ansprüche 1 bis 7, **dadurch gekennzeichnet, dass** das Material derart gewählt ist und/oder die Flächen der zum Gut (16) weisenden Abschnitte so strukturiert sind, dass niedriges Gleitvermögen gegenüber dem Material des Gutes (16) an diesen Stellen vorliegt.

## Claims

1. Formed part for holding and stiffening a flap-shaped cut-out portion (15) of a flat material (16), wherein the flap-shaped cut-out portion (15) can be folded out from the surface of the material (16) and can be folded back into the surface of the material (16) by means of the formed part (1; 30; 40; 50),
with a flat component (2; 46) for covering at least the course of the cut (18) and optionally a folding line (19) between the free ends (17) of the course of the cut (18), and
with at least one web component (3; 31; 41; 54) projecting vertically from the flat component (2; 46) providing projections (10, 11; 33; 44; 53) in a plane parallel to the plane of the flat component (2; 46), wherein the distance between the flat component (2; 46) and the projections (10; 11; 33; 44; 53) substantially corresponds to the thickness of the material (16) at these positions in order to accommodate a cut-free section of the flap-shaped cut-out portion (15),
**characterised by**
a bow element (4; 32; 48; 52), which is connected at its ends to the flat component (2; 46) via connecting webs (12, 13), wherein the connecting webs (12, 13) are dimensioned and arranged in such a manner that they penetrate the cut in the region of the free ends (17) of the course of the cut (18) and can engage through the material there, wherein the distance between the flat component (2; 46) and the bow element (4; 32; 48; 52) substantially corresponds to the thickness of the material (16) at these positions and also substantially corresponds to the thickness of the material along the course of the folding line (19).

2. Formed part according to claim 1,
**characterised in that**
a projection (33) of at least one web component (31) provided for the accommodation of a cut-free section of the flap-shaped cut-out portion (15) is connected to the bow element (32) via a connecting portion (34), wherein the distance between the connecting portion (34) and the surface defined by the flat component (2) substantially corresponds to the thickness of the material (16) at this position in the region of the extent of the connecting portion (34).

3. Formed part according to claim 1 or 2,
**characterised in that**,
in the case of a discontinuous course of the bow element (48), its free ends are connected via corresponding connecting portions to a corresponding projection (44) of a web component (41).

4. Formed part according to claim 3,
**characterised in that**
the free ends are connected via corresponding connecting portions only to one corresponding projection (44).

5. Formed part according to any one of claims 1 to 4,
**characterised in that**
the flat component (2; 46) extends in plan view in a substantially rectangular manner, and the bow element (4) extends substantially parallel to one of the sides of the rectangle.

6. Formed part according to any one of claims 1 to 5,
**characterised in that**
the flat component (2) is designed as a frame element with at least one opening (9) in the extent of its surface.

7. Formed part according to any one of claims 1 to 6,
**characterised by**
an injection-moulded part made of synthetic material.

8. Formed part according to any one of claims 1 to 7,
**characterised in that**
the material is selected in such a manner and/or the surfaces of the components facing towards the material (16) are structured in such a manner, that a low sliding potential relative to the fabric of the material (16) is provided at these positions.

## Revendications

1. Pièce moulée pour supporter et renforcer une partie de découpe (15) en forme de patte dans un produit (16) plat, la partie de découpe (15) en forme de patte pouvant être dépliée au moyen de la pièce moulée (1 ; 30 ; 40 ; 50) en sortant de la surface du produit (16) et pouvant être repliée dans celle-ci
avec une partie plate (2 ; 46) pour le revêtement au moins du tracé de coupe (18) et éventuellement d'une ligne de pliage (19) entre les extrémités libres (17) du tracé de coupe (18), et
avec au moins une partie de barrette (3 ; 31 ; 41 ; 54) présentant sur l'extrémité des saillies (10, 11; 33 ; 44 ; 53) dans un plan parallèle au plan de la partie plate (2; 46) et avançant perpendiculairement par rapport à la partie plate (2; 46), la distance entre la partie plate (2 ; 46) et les saillies (10 ; 11; 33 ; 44 ; 53) correspondant sensiblement à l'épaisseur du produit (16) en ces endroits pour le logement d'une partie découpée librement de la partie de découpe (15) en forme de patte,
**caractérisée par**
un élément de bride (4 ; 32 ; 48 ; 52) qui est relié en ses extrémités à la partie plate (2 ; 46) par des barrettes de liaison (12, 13), les barrettes de liaison (12, 13) étant dimensionnées et disposées de telle sorte qu'elles traversent la coupe dans la zone des extrémités (17) libres du tracé de coupe (18) et peuvent saisir le produit (16) à cet endroit, la distance entre la partie plate (2 ; 46) et l'élément de bride (4 ; 32 ; 48 ; 52) correspondant sensiblement à l'épaisseur du produit (16) en ces endroits et sensiblement également à l'épaisseur du produit (16) dans le tracé de la ligne de pliage (19).

2. Pièce moulée selon la revendication 1, **caractérisée en ce qu'**une saillie (33), prévue pour le logement d'une découpe dégagée en coupant de la partie de découpe (15) en forme de patte, d'au moins une partie de barrette (31) est reliée à l'élément de bride (32) au moyen d'une partie de liaison (34), la distance entre la partie de liaison (34) et la surface définie par la partie plate (2) correspondant sensiblement à l'épaisseur du produit (16) en cet endroit dans la zone du tracé de la partie de liaison (34).

3. Pièce moulée selon la revendication 1 ou 2, **caractérisée en ce que**, avec un tracé discontinu de l'élément de bride (48), ses extrémités libres sont reliées au moyen de parties de liaison appropriées à une saillie (44) appropriée d'une partie de barrette (41).

4. Pièce moulée selon la revendication 3, **caractérisée en ce que** les extrémités libres sont reliées au moyen de parties de liaison appropriées à seulement une saillie (44) correspondante.

5. Pièce moulée selon l'une quelconque des revendications 1 à 4, **caractérisée en ce que** la partie plate (2 ; 46) est sensiblement de forme rectangulaire en vue de dessus et l'élément de bride (4) est sensiblement parallèle à l'un des côtés du rectangle.

6. Pièce moulée selon l'une quelconque des revendications 1 à 5, **caractérisée en ce que** la partie plate (2) est conçue comme partie de cadre avec au moins une ouverture (9) dans son tracé de surface.

7. Partie moulée selon l'une quelconque des revendications 1 à 6, **caractérisée par** une pièce moulée par injection en plastique.

8. Pièce moulée selon l'une quelconque des revendications 1 à 7, **caractérisée en ce que** le matériau est choisi et/ou les surfaces des parties dirigées vers le produit (16) sont structurées de telle sorte qu'on a une faible capacité de glissement par rapport au matériau du produit (16) en ces endroits.
